# EUROPEAN PATENT SPECIFICATION

(11) **EP 3 858 142 B1**
(45) Date of publication and mention of the grant of the patent: **29.03.2023**
(21) Application number: 20155022.5
(22) Date of filing: 31.01.2020
(51) Int. Cl.: A22B 7/00, A01K 45/00, B25J 11/00

(54) **AUTOMATED REMOVAL OF ANIMAL CARCASSES**
AUTOMATISIERTE ENTFERNUNG VON TIERKÖRPERN
ÉLIMINATION AUTOMATISÉE DE CARCASSES D'ANIMAUX

(43) Date of publication of application: 04.08.2021
(73) Proprietor: Farm Robotics and Automation SL, 08800 Vilanova i la Geltru (ES)
(72) Inventor: Hartung, Jörg, 30989 Gehrden (DE); Rosés Domènech, Daniel, 08009 Barcelona (ES); Lehr, Heiner, 08800 Vilanova i la Geltru (ES)
(74) Representative: AGCO Intellectual Property Department

(56) References cited:
- WO-A1-2018/015519
- US-A1- 2004 050 338
- US-A1- 2019 166 788

## Description

### Technical field of the invention

The present invention relates to the field of raising animals, and particularly to large-scale farming of animals, e.g. poultry. The present invention specifically relates to a device and a method for removing animal carcasses from an animal housing facility, such as a barn or a coop.

### Background of the invention

Factory farms, as known in the art, are typically used to raise large quantities of animals, and particularly poultry, such as turkeys, ducks, geese and chickens, for food production, either for meat or for eggs. An evolution from traditional -scale farming to large-scale and highly specialized facilities is, at least in part, driven by the high demand for meat. However, this scaling up introduces new challenges and aggravates pre-existing problems and difficulties. Currently, the conventional methods and equipment used in animal farming are still commonly used in a factory farming setting without radical changes.

Raising animals, such as poultry, requires constant care of the animals and their needs. However, it is likely unavoidable that animals die in the animal housing facility. In the first week, there can be slow growers, weak birds, lame chickens and infection by ascites diseases, but usually, after a peak period of three days, in the next three weeks problems are low. Birds can die under abnormal conditions such by heat stress during heat waves. Young broilers can develop pulmonary hypertension syndrome, and mortality is greatest after 5 weeks of age. It is important that the carcasses are removed swiftly to avoid the spreading of diseases. Finding, fetching and disposing of animal carcasses is a labor-intensive process. For example, since both mortality rates and the weight per animal may generally rise when poultry matures, removing older birds becomes particularly demanding, and can be considered as one of the most labor intensive tasks in industrial poultry farming. Measuring weight loss is important as an indicator of health problems. The removal of carcasses by humans also means exposure of humans to dust including faeces or vomit, gasses such as methane and diseases such as listeria and pathogens like E Coli, or botulism, salmonella, campylobacter or other infections from a decaying body.

Furthermore, a risk exists that other animals are inadvertently injured or bruised by the worker when collecting a dead animal, or by themselves when moving out of the way of the worker. Another undesirable effect may be stress of the animals caused by the activities of the workers. To avoid or minimize the risks of physical injury and stress, it is clear that actions should be carried out at a slow pace and with precision, which makes the task even more time-consuming and expensive in terms of labor cost. To ensure sufficient access to food and water, e.g. particularly of hatchlings and younger chicks, the floor of the facility is preferably left free of equipment. As the birds get older and bigger the density of birds increases which means that it can be difficult for a worker to move around freely in the building to collect dead animals. For example, suspended feed lines and/or water lines may form obstructions. Unfortunately, compared to other essential processes, such as the distribution of food and water, the removal of animal excreta and the cleaning the facility, the removal of dead animals is a relatively complex task that is difficult to automate.

The United States patent US 4,020,793 discloses an approach to automate the collection and disposal of dead poultry. A horizontally extending endless conveyor serves as floor for supporting the poultry. This conveyor is advanced at a slow speed that is substantially imperceptible to the poultry standing thereon. Droppings and dead or infirm poultry are removed via a chute at the downstream end of the conveyor, while the live and healthy poultry will move slowly along the slowly moving conveyor, on average, to retain their positions within the enclosure.

Even though it is known in the art to suspend poultry from a conveyor line to facilitate routing to various processing operations throughout a meat processing plant, this approach has found little traction in automating farming operations. For example, even in a meat processing plant, poultry carcasses are often manually hung by a knuckle in the fork of a shackle by a worker. US2004/0245074 discloses an example of a conveyance system for removing dead animals from animal raising houses. A conveyor forms a closed loop and has one or more carriers attached thereto. For example, such carrier can be a hanger, e.g. such that animals can be hung in a crotch by the legs, hocks or neck, or a bucket.

It is known in the art to feed chickens using a feed cart suspended from an overhead rail system in a poultry house, even though automated feeding systems using feed distribution lines are also known. The United States patent 4,223,638 discloses a feed hopper suspended from a rail system, onto which a bucket-shaped receptacle is mounted to store dead animals or debris. This advantageously allows a farmer to remove dead animals during a feeding run, even though this approach appears less useful when an automated feeding system is used.

The United States patent 6,939,218 discloses another approach for removing carcasses of dead poultry randomly scattered throughout a poultry house, in an attempt to reduce the amount of time and labor required to remove dead poultry. A number of unobstructed parallel lanes are formed in the poultry house along which a worker can traverse the facility to collect dead poultry. A basket suspended by an overhead rail is used to collect the carcasses, in which the rail is configured such that the basket can easily reach positions on the floor where the carcasses are stacked during the traversal of each of the parallel lanes.

WO2018/015519 discloses embodiments in line with the pre-characterising portion of claim 1.

### Summary of the invention

It is an object of the present invention to provide efficient and/or effective means and methods to remove animal carcasses, such as poultry carcasses, from an animal raising facility. An advantage of embodiments of the present invention is to provide methods and means to remove animal carcasses automatically or at least partially automatically.

It is an advantage of embodiments of the present invention that animal cadavers can be easily, quickly and/or with little labor involvement removed from a factory farm.

It is an advantage of embodiments of the present invention that it is suitable for the efficient and effective removal of poultry carcasses, such as turkeys, ducks, geese and chickens, from an animal housing facility, such as a barn or a coop.

It is an advantage of embodiments of the present invention that carcasses can be detected and quickly removed, e.g. to avoid the spreading of diseases, e.g. to avoid the spreading of bacteria such as botulism, salmonella and campylobacter.

It is an advantage of embodiments of the present invention that dead animal removal can be (at least partially) automated such as to reduce the labor requirements, and/or to avoid or reduce the mental and physical burden to workers that would typically perform such task.

It is an advantage of embodiments of the present invention that workers need to enter the enclosure where the animals are kept less often, thus reducing the risk that healthy animals are injured or bruised, as well as occupational hazards to the worker, e.g. the risk of accidents and of harmful exposure, e.g. to ammonia and/or dust.

It is an advantage of embodiments of the present invention that animal stress levels may be kept low, e.g. when compared to at least one prior-art approach of removing dead animals.

It is an advantage of embodiments of the present invention that operational costs in raising animals, such as poultry, can be reduced, e.g. by reducing the workforce requirements.

It is an advantage of embodiments of the present invention that dead animals are collected and stored in a suitable receptacle in a simple operation, thereby storing the carcass while other dead animals are located and/or collected.

It is an advantage of embodiments of the present invention that superfluous movement back and forth between a dead animal collection area, e.g. an animal housing location, and a disposal spot, e.g. a garbage chute, is avoided by automatically detecting when a receptacle for storing dead animals needs to be emptied.

It is an advantage of embodiments of the present invention that aspects of the dead animals (like weight) can be monitored/measured which allow conclusions to be drawn concerning the herd development and health.

The above objective is achieved by a device in accordance with claim 1 and a method in accordance with claim 11.

In a first aspect, the present invention relates to a device configured for removing animal carcasses from an animal housing facility, the device comprising:
a manipulator configured to collect a dead animal when the manipulator (8) is located in a predetermined relative position with respect to the dead animal;
an actuator configured to move the manipulator inside the animal housing facility; said actuator comprising a primary actuator for mounting on a rail system and for moving the device along a track or rail of the rail system, and a secondary actuator for moving the manipulator with respect to the primary actuator;
a camera configured to identify and locate the dead animal; and
a processor configured to:
   - control the actuator to move to a target position indicative of a rough position of the dead animal in the animal housing facility,
   - when said target position is reached, identify and locate the dead animal using said camera,
   - thereafter, steer the actuator to a precise position of the dead animal as located by using the camera, such that the manipulator is brought into the predetermined relative position with respect to the dead animal,
   - when the manipulator is in the predetermined relative position, control the manipulator such as to collect the dead animal with the manipulator, and
   - control the actuator to move to a predetermined disposal location and depositing the dead animal at the disposal location
characterised in that said secondary actuator comprises:
- a telescopic arm for vertically displacing the manipulator,
- a rotation stage, on the telescopic arm,
- a translation stage, on the rotation stage,
wherein the rotation stage is adapted for rotating the translation stage in a horizontal plane and the translation stage is adapted for translating the manipulator radially inward and outward.

The actions of the secondary actuator may be carried out in an automatic way, e.g. when controlled by the controller or on-board controller.

Embodiments of the present invention provide a partially or preferably completely automated method or system without intervention by humans. The detection of a dead animal and/or the detection of the approximate location of the dead animal can be made with a device such as described in WO2018/015519 herewith in its entirety. Subsequently, a device according to embodiments of the present invention can receive the location information preferably automatically and can pick dead animal and optionally weighing them individually, whereby the measured weight of the dead animal can be compared to a standard weight or an average weight.

This method or parts of this method are preferably carried out automatically. To achieve this requires a number of mechanical devices such as a manipulator and an actuator, one or more controllers to control the operation of the mechanical devices, a number of sensors such as cameras and means to direct signals from these sensors to the one or more controllers.

To achieve an at least partially automatic processing, the device for removing animal carcasses is preferably adapted to perform one, some or all of the following steps, e.g. by being controlled by a controller or an on-board controller, preferably in an automatic way:
the controller or on-board controller being adapted to receive signals e.g. from one or more cameras or other sensors such as sensors for determination of a location of the device for removing animal carcasses in an animal housing facility,
the controller or onboard controller being adapted to receive commands or instructions such as co-ordinates of a dead animal,
the controller or onboard controller being adapted to control (controlling preferably in an automatic way) an actuator to move the device for removing animal carcasses to a target position indicative of a rough position of the dead animal in an animal housing facility,
when said target position is reached by the device for removing animal carcasses, one or more sensors in combination with the controller or on-board controller identifies (preferably in an automatic way) and locates the dead animal, e.g. by the controller or on-board controller using the one or more sensors such as the camera to locate a dead animal (such location is preferably done in an automatic way),
thereafter, the controller or onboard controller being adapted to steer the actuator to a precise position of the dead animal (and this preferably in an automatic way) as located by using sensors such as the camera, the controller or onboard controller being adapted to control a manipulator and to bring it into a predetermined relative position with respect to the dead animal (this preferably in an automatic way),
when the manipulator is in the predetermined relative position, i.e. when the controller or on-board controller detects that the manipulator has reached this predetermined position, the controller or on-board controller controlling the manipulator such as to collect the dead animal with the manipulator (preferably in an automatic way), and the controller or on-board controllers controlling the actuator to move the device for removing animal carcasses to a predetermined disposal location and to deposit the dead animal at the disposal location (preferably in an automatic way). Aspects of the dead animal can be measured such as those which can give an indication of the health of the flock.

A device in accordance with embodiments of the present invention may comprise a communication unit and/or a monitoring system for monitoring the welfare of animals in the animal housing facility and for identifying and locating dead animals in the animal housing facility, in which the processor may be adapted for determining said target position by taking instructions and/or coordinates received via the communication unit and/or by taking the position of a dead animal as identified and located by the monitoring system into account. All these actions are preferably carried out in an automatic way.

The monitoring system may be a system for monitoring the welfare of animals as disclosed in WO2018/015519.

In a device in accordance with embodiments of the present invention, the camera may be located in or on the manipulator, and the controller or on-board controller using, for example, a processor which may be adapted for identifying and locating the dead animal by performing a sweeping motion, in which the actuator moves the camera over an imaging sweep range until said dead animal is recognized by the processor in an image acquired by the camera (preferably in an automatic way).

In a device in accordance with embodiments of the present invention, the controller or on-board controller may use a processor which may be adapted for selecting the imaging sweep range from a plurality of possible imaging sweep ranges, e.g. a selection from a discrete or continuous number of possible sweep ranges, taking the target position into account, such as to limit the range of the scanning motion to a range where the dead animal is likely to be found (preferably in an automatic way).

In a device in accordance with embodiments of the present invention, the controller or on-board controller may use a processor which may be adapted for steering the actuator to the precise position of the dead animal by iteratively determining a next movement to perform by the actuator in a next iteration step taking sensor data and/or a camera image acquired in a present iteration step into account (preferably in an automatic way), thus iteratively updating the position of the manipulator until the manipulator reaches the predetermined relative position with respect to the dead animal (preferably in an automatic way).

A device in accordance with embodiments of the present invention may comprise a receptacle, and the controller or on-board controller may make use of a processor which may be may be adapted for controlling the actuator and the manipulator so as to deposit the dead animal, collected by the manipulator, into the receptacle (preferably in an automatic way).

In a device in accordance with embodiments of the present invention, the controller or more on-board controller may make use of a processor which may be adapted to control the actuator such as to position the manipulator above an open end at an upper side of the receptacle (preferably in an automatic way) and to control the manipulator such as to release the collected dead animal when positioned above the open upper side of the receptacle (preferably in an automatic way).

In a device in accordance with embodiments of the present invention, the receptacle may comprise an emptying mechanism for discharging the contents of the receptacle (preferably in an automatic way), and the controller or on-board controller may use a processor which may be adapted for depositing the dead animal or dead animals, contained in the receptacle, at the disposal location by controlling the emptying mechanism (preferably in an automatic way).

A device in accordance with embodiments of the present invention may comprise a contents sensor to determine a quantity indicative of the contents of the receptacle, wherein the controller or on-board controller uses a processor which may be adapted to determine when the receptacle is full or substantially full based on a signal received from the contents sensor, and for controlling the actuator to move the actuator to the predetermined disposal location when the receptacle is determined to be full or substantially full (preferably in an automatic way).

In a device in accordance with embodiments of the present invention, the actuator may comprise a primary actuator for mounting on a rail system and for moving the device along a track or rail of the rail system, and a secondary actuator for moving the manipulator with respect to the primary actuator. In an alternative formulation, the primary actuator may be referred to as the first actuator, and the secondary actuator may be referred to as the second actuator.

In a device in accordance with embodiments of the present invention, the controller or on-board controller may use a processor which may be adapted for controlling the primary actuator to move the actuator to the target position, being an approximative position due to at least the limitations imposed by the movement constraints of movement along the track or rail, and thereafter, steering the secondary actuator to the more precise position of the dead animal as determined by the processor using said camera, preferably in an automatic way.

In a device in accordance with embodiments of the present invention, the manipulator may comprise a support surface for receiving the dead animal i.e. onto which the dead animal can be placed and a displacement mechanism for pushing the dead animal onto the support surface when controlled by the processor which may be part of the controller or on-board controller so as to collect the dead animal (preferably in an automatic way).

In a device in accordance with embodiments of the present invention, the camera may comprise an optical camera and a thermal camera, and the one or more on-board controllers may use a processor which may be adapted for identifying and locating the dead animal by detecting the presence of an animal shape in an optical image acquired by said optical camera and, at a corresponding position, the absence of a heat signature of the animal in a thermal image acquired by the thermal camera (all preferably being carried out automatically)..

In a device in accordance with embodiments of the present invention, the animals may be poultry.

In a second aspect, the present invention relates to a method for removing, with the device described above, animal carcasses, such as poultry carcasses, from an animal housing facility (preferably carried out automatically). The method comprises moving a manipulator inside the animal housing facility, e.g. under the control of a processor which may be part of one or more controllers or on-board controllers, to a target position indicative of a rough position of a dead animal in the animal housing facility, preferably in an automatic way. The method can comprise identifying and locating the dead animal preferably in an automatic way e.g. using a camera, e.g. when the target position is reached, e.g. by processing images acquired by the camera on the processor which may be part of one or more controllers or on-board controllers. The method can comprise steering the manipulator to a precise position of the dead animal as located by using the camera, e.g. steering the manipulator using the processor which may be part of the controller or the on-board controller, such that the manipulator is brought into a predetermined relative position with respect to the dead animal, preferably in an automatic way. The method comprises collecting the dead animal with the manipulator, preferably in an automatic way, e.g. under the control of the processor which may be part of the controller or the on-board controller, when the manipulator is in the predetermined relative position, e.g. (straight) above the dead animal. The method comprises moving, e.g. under control of the processor which may be part of the controller or the on-board controller, the manipulator to a predetermined disposal location and depositing, e.g. under control of the processor which may be part of the controller or the on-board controller, the dead animal at the disposal location preferably in an automatic way. Aspects of the dead animal can be measured such as those which can give an indication of the health of the flock.

The method is a computer-implemented method, i.e. is performed by a processor which may be part of the controller or the on-board controller, for example instead of a human being. However, the term "computer-implemented" and "processor" are not to be construed narrowly. For example, the method may be encoded in software for execution by a general-purpose computer, or by a microprocessor or controller or microcontroller such as the controller or the on-board controller, which may be specifically designed for the intended task. Furthermore, the method may be encoded in a hardwire configuration scheme, e.g. in a configuration of a field-programmable gate array device. Furthermore, the method may be embodied in the specific design of an application specific integrated circuit. Even though the steps of this computer-implemented method are executed by a processor which may be part of a controller or an on-board controller, it will be understood that at least some of these steps require physical interactions and, thus, rely on physical components under the control of the processor (which may be part of the controller or the on-board controller) in executing the method preferably in an automatic way.

A method in accordance with embodiments of the present invention may comprise determining, e.g. using a processor which may be part of the controller or the on-board controller, a target position for collecting a dead animal, in which this target position is determined by taking or receiving instructions and/or coordinates received via a communication unit and/or by taking a position of a dead animal as identified and located by a monitoring system into account preferably in an automatic way.

In a method in accordance with embodiments of the present invention, identifying and locating the dead animal may comprise performing a sweeping motion (e.g. under control of the processor which may be part of the controller or the on-board controller) to move the camera over an imaging sweep range until the dead animal is recognized preferably in an automatic way, e.g. by the processor which may be part of the controller or the on-board controller, in an image acquired by the camera.

In a method in accordance with embodiments of the present invention, identifying and locating the dead animal preferably in an automatic way may comprise detecting the presence of an animal shape in an optical image, e.g. an RGB image, e.g. acquired by an optical camera, and, at a corresponding position, detecting the absence of a heat signature of the animal in a thermal image, e.g. acquired by a thermal camera preferably in an automatic way.

In a method in accordance with embodiments of the present invention, performing the sweeping (scanning; tracking) motion may comprise selecting the imaging sweep range preferably in an automatic way, e.g. by the processor which may be part of the controller or the on-board controller, from a plurality of possible imaging sweep ranges taking the target position into account, such as to limit the range of the scanning motion to a range where the dead animal is likely to be found.

In a method in accordance with embodiments of the present invention, the steering of the manipulator preferably in an automatic way may comprise iteratively determining a next movement in a next iteration step taking sensor data and/or a camera image acquired in a present iteration step into account, thus iteratively updating the position of the manipulator until the manipulator reaches the predetermined relative position with respect to the dead animal. preferably in an automatic way.

In a method in accordance with embodiments of the present invention, collecting the dead animal preferably in an automatic way may comprise lowering the manipulator in an open position from above the dead animal, such that the dead animal is positioned in between a support surface and a displacement mechanism, and then closing the manipulator such that the support surface and the displacement mechanism are moved toward each other, thereby pushing the dead animal onto the support surface preferably in an automatic way.

A method in accordance with embodiments of the present invention may comprise depositing the dead animal collected by the manipulator into a receptacle preferably in an automatic way.

A method in accordance with embodiments of the present invention may comprise determining, e.g. by the processor which may be part of the controller or the on-board controller, when the receptacle is full or substantially full preferably in an automatic way. For example, this determining may comprise determining a quantity indicative of the contents of the receptacle, e.g. using a contents sensor preferably in an automatic way. This quantity may comprise a weight, a mass, a volume, a distance from a reference point to a nearest point occupied by contents of the receptacle along a sensing path, an interruption of a line of sight along an optical gate path in the receptacle, and the like. Determining when the receptacle is full or substantially full, may thus be based on a signal received from the contents sensor preferably in an automatic way.

In a method in accordance with embodiments of the present invention, moving the manipulator to the predetermined disposal location preferably in an automatic way may comprise moving the receptacle to the predetermined disposal location when the receptacle is determined to be full or substantially full.

In a method in accordance with embodiments of the present invention, depositing the dead animal preferably in an automatic way may comprise discharging the contents of the receptacle at the disposal location, e.g. under the control of the processor which may be part of the controller or the on-board controller, and using an emptying mechanism of the receptacle preferably in an automatic way.

In a third aspect, the present invention relates to a computer program product for, when executed by a processor which may be part of the controller or the on-board controller, performing a method in accordance with embodiments of the second aspect of the present invention preferably in an automatic way.

These and other aspects of the present invention will be apparent from and elucidated with reference to the embodiment(s) described hereinafter.

The independent and dependent claims describe specific and preferred features of the invention. Features of the dependent claims can be combined with features of the independent claims and with features of other dependent claims as deemed appropriate, and not necessarily only as explicitly stated in the claims.

### Brief Description of the Drawings

FIG 1 illustrates a device in accordance with embodiments of the present invention.
FIG 2 illustrates a device in accordance with embodiments of the present invention.
FIG 3 illustrates a device in accordance with embodiments of the present invention.
FIG 4 illustrates a device in accordance with embodiments of the present invention.
FIG 5 illustrates a method in accordance with embodiments of the present invention.

The drawings are schematic and non-limiting. Elements in the drawings are not necessarily represented on scale, e.g. an element may be exaggerated for illustrative purposes or reduced in scale to keep the drawing clear and comprehensible. The present invention is not necessarily limited to the specific embodiments of the present invention as shown in the drawings. Reference signs in the claims shall not be construed as limiting the scope. In different drawings, the same reference signs may refer to the same or analogous elements.

### Definitions

### On-board controller

A controller such as an on-board controller is provided with all means to process data digitally, to receive images and/or data, to receive commands and to act upon them, e.g. by providing an output signal, to generate signals that control movements and actions of actuators, manipulators, grippers, motors, etc. The controller does not need to be on-board a robot but in preferred embodiments it is. The controller may be placed in a position from which it can communicate with actuators, manipulators, drives etc., e.g. wirelessly. This could allow computer processing power to be placed outside any areas which may be subject to methane or other materials which could cause corrosion or other damage to electronic equipment.
A controller such as an on-board controller can have several ports with associated input and/or output ports and communication interfaces such as:
- a cable or wireless connection for communication with a local area network (not shown) and/or for communication with a display screen, and/or
- a serial connection such as a USB connection, and may also include a processor, a random access memory, non-volatile memory, input and/or output ports whereby all can be linked by a bus system.
The functions of the controller or on-board controller may be provided by software that has been compiled into a computer program for running on the controller with its processor. The controller may be programmed to carry out these functions automatically without human interference. Alternatively a human may use the controller is a remote way, e.g. being in contact with the device via a wireless link and even being outside the farming facility.

### Substantially

As used in this invention "substantially" means within plus or minus 10% or 5% of the respective value. If the value is a direction then "substantially" means through an angle of 10° or up to 20°. Hence, for example with respect to filling substantially full means 5% or 10% below completely full.

### Detailed description of embodiments

The present invention is only limited by the attached claims, notwithstanding the exemplary embodiments described hereinbelow. The attached claims are hereby explicitly incorporated in this detailed description, in which each claim, and each combination of claims as allowed for by the dependency structure defined by the claims, forms a separate embodiment of the present invention.

The word "comprise," as used in the claims, is not limited to the features, elements or steps as described thereafter, and does not exclude additional features, elements or steps. This therefore specifies the presence of the mentioned features without excluding a further presence or addition of one or more features.

Ordinal references, such as first, second and the like, in the description and/or in the claims may be used to discern similar elements and do not necessarily define a sequence, either temporally, spatially, in ranking or in any other manner. Such terms may be interchangeable under appropriate circumstances and embodiments of the invention may relate to other sequences than explicitly described or illustrated herein.

Spatial references, such as top, bottom, on, under and the like, in the description and/or in the claims are used for descriptive purposes and not necessarily only for describing relative positions. It shall be clear that embodiments may relate to other positional arrangements of elements described using such spatial references, unless the relative positioning would be necessary for achieving the desired technical effect, i.e. for solving the underlying objective technical problem, as would be evident to the skilled person. Therefore, it is clear that such terms are interchangeable under appropriate circumstances and that embodiments of the present invention may be capable of operation in other orientations than described or illustrated herein.

In this detailed description, various specific details are presented. Embodiments of the present invention can be carried out without these specific details. Furthermore, well-known features, elements and/or steps are not necessarily described in detail for the sake of clarity and conciseness of the present disclosure.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments. References to "embodiments" or "in embodiments" are to be interpreted in the same way.

Various features of the invention may be grouped together in a single embodiment, figure, or description thereof for the purpose of streamlining the disclosure and aiding in the understanding of inventive aspects. This is not to be interpreted as reflecting an intention that the claimed invention requires more features than are expressly recited in each claim. Rather, as the following claims reflect, inventive aspects may lie in less than all features of a single foregoing disclosed embodiment as explicitly described in the description. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a device for removing animal carcasses from an animal housing facility, such as a barn or a coop preferably in an automatic way. The animals may refer to animals that typically weigh less than 20 kg, e.g. less than 17.5 kg, e.g. less than 15 kg, e.g. less than 10 kg, e.g. less than 5 kg. The animals may refer to animals that typically have a volume that is less than 20 dm³, e.g. less than 17.5 dm³, e.g. less than 15 dm³, e.g. less than 10 dm³, e.g. less than 5 dm³. The animals may be poultry. For example, the animals may refer to turkeys, ducks, geese and/or chickens. The animal housing facility may be a barn, a coop, a poultry house, e.g. a chicken house, or an industrial animal farming building. The animal housing facility may be adapted for housing and/or raising the animals. The animals may be farmed for fur, meat or egg production. The animal housing facility (further also referred to as "shed") may be, for example, suitable for housing (simultaneously) at least 1,000 of the animals, for example at least 10,000 of the animals.

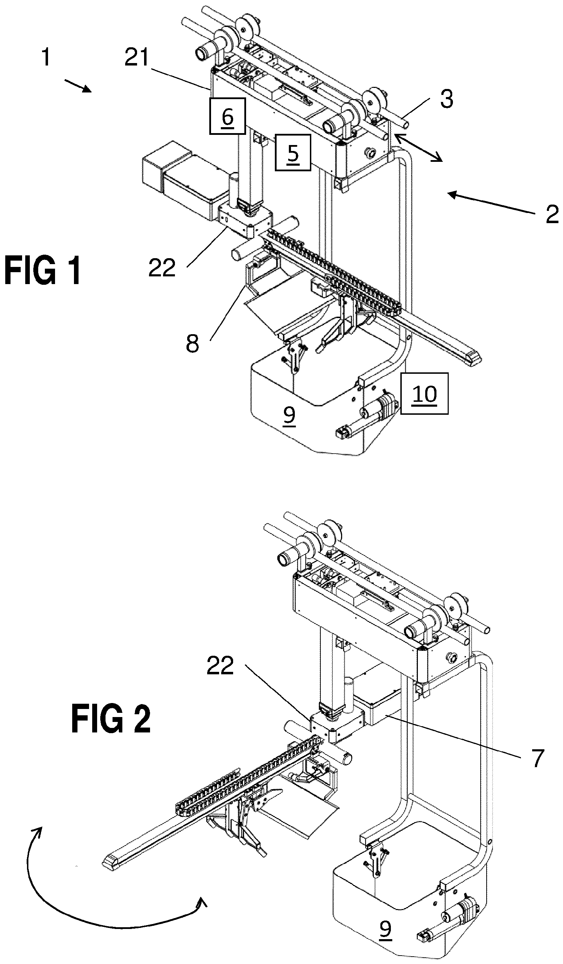

Referring to FIG 1, a device 1 in accordance with embodiments of the present invention is shown. The device 1 may be a robot, e.g. an autonomous robot or a semiautonomous robot, e.g. a robot that can act independently upon receiving instructions and/or coordinates from a control system. The control system may include one or more on-board controllers which control movements of the device. The device is adapted for picking up dead animals, e.g. dead poultry, e.g. dead chickens preferably in an automatic way. The device may also be adapted for identifying and/or locating a dead animal preferably in an automatic way. The device may be adapted for determining relevant data regarding the dead animal preferably in an automatic way, e.g. body statistics and/or indicator(s) for determining a likely cause of death. The device is adapted for depositing the dead animal at a disposal location preferably in an automatic way.

The device 1 comprises an actuator 2, i.e. a locomotion system, for moving the device inside the animal housing facility, e.g. for moving the device along at least one spatial dimension preferably in an automatic way. For example, the actuator 2 may adapted for slidably being mounted onto a rail system 3, such as an overhead rail, e.g. a ceiling-mounted rail. The actuator 2 may comprise a motor for propelling the movement of the device along the rail preferably in an automatic way. In the example shown in FIG 1, the actuator 2 comprises at least one wheel that, in use, is supported by the rail system 3 and a motor, e.g. in a motion box, to drive a rotation of at least one of the wheels, in a controlled manner, e.g. a controlled speed and duration, and a controlled sense of direction along the rail. The device is not limited to devices that move along a ceiling-mounted track or rail, e.g. the device may be a track vehicle that moves along a ground-mounted track, a wall-mounted track, or an arbitrarily supported track or combination of tracks. Ground based devices are less preferred compared to hanging the device from a rail system. Ground based devices may optionally not be part of the present invention. The range of motion is not necessarily limited to a linear one-dimensional motion or a curvilinear path. For example, the actuator may comprise means for switching tracks at track intersections or rail switches, preferably in an automatic way.

The device may comprise a communication module 5 for receiving instructions and/or target (spatial) coordinates from a control system or a system for monitoring the welfare of livestock in a shed. The communication module can be part of an on-board controller. The control system may be adapted for receiving the inputs provided by one or more of the systems for monitoring the welfare of livestock, and may be adapted for providing outputs, such as (at least approximative) spatial coordinates of detected dead animals, to one or more of the devices 1 in accordance with embodiments of the present invention preferably automatically. The system for monitoring the welfare of the livestock may comprise a plurality of sensors for measuring ambient conditions in the shed and may comprise at least one camera. This system can be adapted for identifying and/or locating dead animals, e.g. based on the images of the at least one camera, which may comprise a thermal camera. Such system is disclosed in the international patent application WO2018/015519. The essential and/or optional features of a system for monitoring the welfare of livestock in a shed disclosed in said publication are considered to be explicitly included, e.g. as optional features, in a device in accordance with embodiments of the present invention.

The device may comprise, e.g. instead of or in addition to the communication module, a system for monitoring the welfare of livestock in a shed (further also referred to as "the monitoring system"), e.g. as described in the reference hereinabove, that is adapted for identifying and locating dead animals in the animal housing facility. For example, the robot adapted to move through the shed and comprising at least two cameras, described in said document, may be co-integrated in the device in accordance with embodiments of the present invention, or this robot may be separate entity (yet at least connected by means of a communication path), i.e. not moving through the shed using the same actuator 2 as referred to hereinabove. For example, said robot and said actuator 2 may travel along the same system of rails through the animal housing facility. Also the robot and the actuator 2 may be modular and each may be mounted or mountable on a basic frame.

The device comprises a processor 6 which can be part of one or more controllers or on-board controllers. The processor 6 is not necessarily limited to a general purpose processor (e.g. adapted for executing a program code), such as a central processing unit, a graphics processing unit, a cell processor, and the like, but may equally refer to an application-specific integrated circuit or configurable hardware, such as a field-programmable gate array.

The processor 6 which can be part of one or more controllers or on-board controllers can be adapted for controlling (e.g. and operably connected to) the actuator 2, to move the actuator to a target position preferably automatically, e.g. to move a primary actuator 21 to an approximative position of the dead animal, e.g. as constrained by the degree(s) of freedom of the primary actuator, e.g. to a closest position to the dead animal on a track along which the primary actuator can move preferably automatically. The processor 6 which can be part of one or more controllers or on-board controllers, may be adapted for determining the target position by receiving and taking instructions and/or coordinates received by the communication unit 5 into account, and/or by taking a position of a dead animal as identified and located by the system monitoring the welfare of the livestock into account preferably automatically. For example, the monitoring system may identify a dead animal and communicate the position of this dead animal to the processor 6 which can be part of one or more controllers or on-board controllers, in use of the device. The position may be determined by the monitoring system by taking at least its own position (e.g. position of said robot) into account when the dead animal is detected. In a particularly simple embodiment, the monitoring system merely comprises a robot that travels through the shed and identifies dead animals, e.g. using camera images. Upon detection of such dead animal, the processor 6 which can be part of the one or more controllers or one or more on-board controllers, may be alerted of the position of the robot when the dead animal was detected preferably automatically. However, and preferably, the robot is adapted for refining the position of the dead animal by taking its own coordinates into account when detecting the dead animal as well as, for example, the camera images (e.g. stereovision images) and/or other sensor readings (such a range-finding laser, radar, lidar, and the like) into account preferably automatically. It this example, the processor 6 which can be part of one or more controllers or on-board controllers may receive a more precise position of the dead animal to act upon. For example, the "more precise position" may define whether the dead chicken was detected on the left or on the right side of a track position where the robot is located (i.e. "more precise" may refer, in this example, to one bit of additional information, even though a plurality of additional bits of information may be even more preferred).

In a device in accordance with embodiments of the present invention, the device (e.g. at least that part of the device that is mechanically connected to and/or integrated with the actuator 2) may be adapted for assuming a compact configuration when the processor 6 which can be part of one or more controllers or on-board controllers is waiting for a target position to be determined and/or while the actuator 2 is travelling through the shed toward a target position. For example, the actuator 2 may comprise a primary actuator 21 for travelling through the shed to the target position, and at least one secondary actuator 22, such as an arm mechanism, for moving a manipulator 8, e.g. an end effector, e.g. a gripper, sufficiently close to the dead animal, once the target position is reached. The secondary actuator may be configured such that (e.g. retracted such that) the device assumes a small or minimal volume in space during a waiting phase and/or a travelling phase. FIG 1 may show an example of such a compact configuration.

Referring to FIG 2, the device 1 comprises a camera 7 to assist in the identification and locating of the dead animal once the target position has been reached. For example, the camera may be positioned on the manipulator of the secondary actuator 22, e.g. on the end effector of the arm mechanism. The secondary actuator 22 may be adapted for performing a scanning motion while the camera acquires images to identify and locate the dead animal preferably automatically. The scanning motion may comprise a rotation of the camera to capture images over an imaging arc. For example, in addition to the spatial coordinates defining the target position, to which position the primary actuator 21 brings the device, the processor which can be part of one or more controllers or on-board controllers may also have received, in operation, additional positional information of the dead animal, such as to limit the range of the scanning motion to a range where the dead animal is likely to be found. For example, based on an indication whether the dead animal is located on the left side or the right side with respect to a track position, the camera may be scanned over a first arc or a second arc, corresponding to respectively the left side or the right side of the track. This can be done automatically. Thus, a scanning sequence may be started to re-identify and locate the dead animal preferably automatically. The camera may perform a sweep, e.g. in the aforementioned example either right or left of the track along which the device moves through the shed, to locate the dead animal. This is preferably done automatically. For example, the secondary actuator 22, e.g. the arm, may perform steps until the dead animal comes into view of the camera, at which time a more exact position of the dead animal can be determined (or is implicitly determined by the position at which the secondary actuator interrupts the scanning sweep). This preferably done automatically.

The camera 7 may be the or a camera of the monitoring system, e.g. particularly (not necessarily exclusively) when the monitoring system is cointegrated (i.e. housed in or on an part actuated by the actuator) with the actuator 2. The camera may comprise at least two different cameras. For example, a dead animal may be detected by a detected presence of an animal shape in an optical image (e.g. red-green-blue, RGB, image, or an equivalent and the absence of a heat signature of the animal in a thermal image (without necessarily being limited to this specific detection technique).

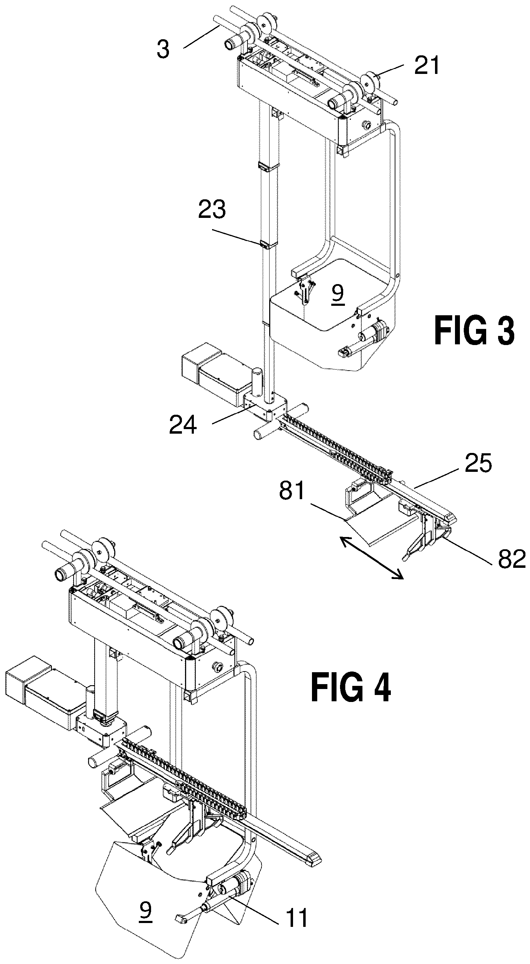

The processor 6 which can be part of one or more controllers or on-board controllers can be adapted for controlling (e.g. and operably connected to) the actuator 2, to move the actuator to the target position preferably automatically. For example, the processor which can be part of one or more controllers or on-board controllers can be adapted for, after moving to an approximative position of the dead animal, e.g. by controlling the primary actuator 21, steering the actuator 2, e.g. the secondary actuator 22, to a more precise position of the dead animal as located by the camera 7, e.g. by taking the more exact position of the dead animal as determined (e.g. by the processor) on the basis of the camera sweep into account. This is preferably done automatically. Thus, a manipulator 8, e.g. an end effector, e.g. a gripper, can be positioned sufficiently close to the dead animal. For example, the position of the actuator, e.g. of the secondary actuator 22, may be iteratively updated while taking sensor data and/or camera images, provided by the camera(s) 7, into account to determine a next movement to perform in a next iteration step. This is preferably done automatically. The movement, performed in each iteration, may comprise a translation in one or more dimensions and/or a rotation in one or more dimensions. Referring to FIG 3, the secondary actuator 22 comprises a telescopic arm 23 for vertically displacing the manipulator 8, e.g. for lowering the manipulator toward the floor of the shed, which may be particularly useful in case of a ceiling-mounted (or generally, suspended) support of the device, e.g. on a ceiling-mounted rail or track system. The secondary actuator 22 comprises a rotation stage 24, e.g. at a free end of the telescopic arm and adapted for rotating a translation stage 25 in a horizontal plane. Finally, the translation stage is adapted for translating the manipulator 8 radially inward and outward preferably automatically, i.e. where 'radially' refers to the circular motion driven by the rotation stage 24.

For example, the position of the manipulator may be iteratively updated until it reaches a predetermined relative position with respect to the dead animal, e.g. a position above the dead animal. Control of this process may be provided by one or more controllers or on-board controllers. The one or more controllers or on-board controllers may perform the aforementioned comparison of optical images and thermal images which may be used to determine the relative position of the dead animal with respect to the manipulator in each iteration step, and to control the steering the manipulator closer, e.g. to the predetermined relative position preferably automatically. However, embodiments are not specifically limited to this approach for detecting the relative position of the dead animal.

When the actuator 2, under control of the processor which may be part of one or more controllers or on-board controllers, has controlled the positioning of the manipulator 8 sufficiently close to the dead animal, e.g. in the predetermined relative position with respect to the dead animal, the processor 6 which may be part of one or more controllers or on-board controllers can be adapted to control the manipulator 8 such as to collect the dead animal with the manipulator preferably automatically. Aspects of the dead animal can be measured such as those which can give an indication of the health of the flock,

The illustrative manipulator 8 shown in the drawings comprises a support surface 81 (support structure), e.g. generally shaped as a dustpan, onto which the dead animal can be placed. The support surface 81 can have e.g. a horizontal or substantially horizontal support surface. In at least one configuration, e.g. in embodiments of the present invention the orientation of the support surface can be changed, prior to use or in use of the device. A displacement mechanism 82, can be provided such as a striking or shoving element for pushing the dead animal onto the support surface. The displacement mechanism may comprise a brush, a shovel, a rake or a similar structure. The manipulator 8 may be adapted for moving the displacement mechanism toward the support surface (or, equivalently, vice versa, or both elements toward each other) such that the dead animal, when positioned in between the displacement mechanism and the support surface can be shoved/moved onto the support surface by the movement of the displacement mechanism preferably automatically. It will be understood that this is merely one example of a suitable manipulator, and a device in accordance with embodiments of the present invention may comprise different types of manipulator to collect the dead animal, such as a gripper, a tweezer, a hook, a robotic hand, a crotch to latch onto the neck, hocks or legs of the dead animal, a suction cup, or any other prior-art solution for grabbing, holding and/or supporting the dead animal.

The device may comprise a receptacle 9, e.g. a basket, and the processor 6 which can be part of one or more controllers or on-board controllers may be adapted for depositing the dead animal into the receptacle, after the dead animal is collected by the manipulator 8 preferably automatically. For example, the secondary actuator may be controlled to return to a default position e.g. a predetermined configuration. This default position may correspond to the compact configuration of the device as referred to hereinabove. In this default position, the manipulator may be positioned above the receptacle, see e.g. FIG 1. The processor 6 which can be part of one or more controllers or on-board controllers may be adapted to open the manipulator 8 such as to release the dead animal into the receptacle, when the dead animal is collected by the manipulator and the default position has been reached preferably in an automatic manner. The receptacle may have an open end at the upper side, e.g. such that the dead animal can easily be dropped into the receptacle from above. For example, the receptacle may be, at least roughly, shaped as a bucket, basket or hopper. For example, the receptacle may comprise a container having an open upper side and is configured to be able to discharge its contents at the bottom, e.g. using an emptying mechanism. The container may taper downward.

It is an advantage that the receptacle, preferably, is dimensioned such that it can store a plurality of dead animals, and the manipulator can be freed to collect a further dead animal while the basket already contains one or more dead animals.

The device 1 may comprise a contents sensor 10, e.g. a load cell, to determine the weight, mass, volume or other quantity indicative of the dead animal(s) contained in the receptacle. It is to be noted that the contents sensor does not necessarily measure the weight or volume of the contents of the receptacle directly, but may determine a weight or volume of the entire receptacle, a part of the device, or the entire device, assuming the mass or volume of the components of the device to be constant or substantially constant. For example, in case of a primary actuator 21 that suspends the device structure on a rail, a load cell way be integrated in the primary actuator to determine the total weight, from which the weight of the dead animals stored in the receptacle 9 can be determined in a straightforward manner. Other examples of contents sensors may include a camera and suitable image analyzer to determine the contents of the receptacle 9, a radar or sonar apparatus or a laser rangefinder to determine the distance of an upper level of the contents in the receptacle to, for example, the upper rim of the receptacle, or an optical gate to determine when a reference level in the receptacle is obstructed by an item in the receptacle, without being limited by these examples.

The processor 6 which can be part of one or more controllers or on-board controllers may be adapted to determine when the receptacle is full or substantially full preferably automatically, e.g. within a predetermined margin to avoid that a dead animal is added and falls out of the receptacle due to exceeding its capacity, based on a signal received from the contents sensor. For example, the receptacle may be considered substantially full when a predetermined weight threshold, volume threshold, distance threshold and/or level indicator threshold is exceeded.

The processor 6 which can be part of one or more controllers or on-board controllers may be adapted for determining relevant data regarding the (e.g. each) dead animal, e.g. body statistics and/or indicator(s) for determining a likely cause of death. For example, the camera may be operated by the processor which can be part of one or more controllers or on-board controllers such as to obtain a (close-up) image of the dead animal when picked up by the manipulator 8. The processor which can be part of one or more controllers or onboard controllers may determine a weight of each dead animal, e.g. using the contents sensor 10, e.g. by difference of the total weight of the receptacle after and prior to adding a specific dead animal. The device may comprise one or more sensors to determine one or more properties of the dead animal when picked up by the manipulator. The processor 6 which can be part of one or more controllers or on-board controllers may be adapted to store in a memory or transmit using the communication unit the body statistics and/or indicator(s) for each collected dead animal.

The processor 6 which can be part of one or more controllers or on-board controllers may be adapted for controlling the actuator 2, to move the actuator to a predetermined disposal location, e.g. to move the primary actuator 21 to a predetermined disposal location, when the receptacle is determined to be full or substantially full. While the device is traveling to the disposal location, the device (e.g. at least that part of the device that is mechanically connected to and/or integrated with the actuator 2) may be adapted for assuming the compact configuration.

Referring to FIG 4, the processor 6 which can be part of one or more controllers or onboard controllers may be adapted to control an emptying mechanism 11 of the receptacle 9 preferably automatically, such as to empty the receptacle when the disposal location has been reached, e.g. when the device is at the disposal location. For example, (without limitation) the emptying mechanism 11 may comprise a piston to move two parts, e.g. halves, of the receptacle forming a hopper structure.

In a second aspect, the present invention relates to a method for removing animal carcasses, such as poultry carcasses, from an animal housing facility.

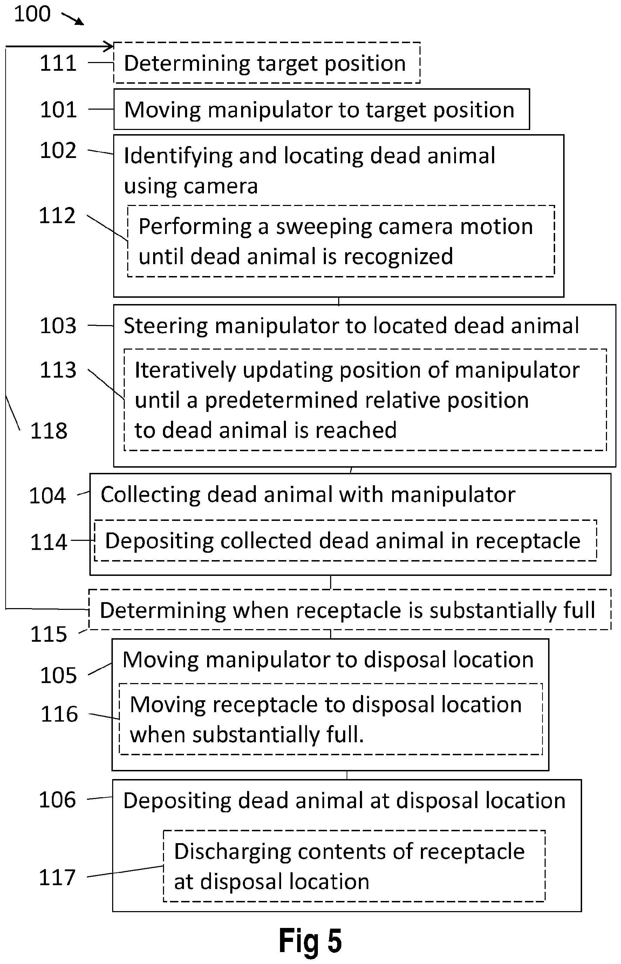

Referring to FIG 5, an illustrative method 100 in accordance with embodiments of the second aspect of the present invention is shown.

The method 100 may comprise determining in step 111, e.g. using a processor 6 which can be part of one or more controllers or on-board controllers, a target position for collecting a dead animal, in which this target position is determined by taking or receiving instructions and/or coordinates received via a communication unit 5 and/or by taking a position of a dead animal as identified and located by a monitoring system into account. The monitoring system may be a system for monitoring the welfare of animals in the animal housing facility and for identifying and locating dead animals in the animal housing facility.

The method 100 comprises moving in step 101 a manipulator 8 inside the animal housing facility, e.g. under the control of the processor 6, which can be part of one or more controllers or on-board controllers to a target position indicative of a rough position of a dead animal in the animal housing facility.

The method can comprise identifying and locating in step 102 the dead animal using a camera 7, when the target position is reached, e.g. by processing images acquired by the camera using the processor which can be part of one or more controllers or on-board controllers.

The camera 7 may be attached to the manipulator 8, e.g. in a fixed arrangement with respect to an actuatable end of the manipulator. The identifying and locating the dead animal in step 102 may comprise performing a sweeping motion in step 112 (e.g. under control of the processor which can be part of one or more controllers or on-board controllers) to move the camera over an imaging sweep range until the dead animal is recognized, e.g. by the processor which can be part of one or more controllers or on-board controllers, in an image acquired by the camera.

The camera may comprise an optical camera and a thermal camera. Identifying and locating the dead animal in step 102 may comprise detecting the presence of an animal shape in an optical image, e.g. an RGB image, e.g. acquired by said optical camera, and, at a corresponding position, detecting the absence of a heat signature of the animal in a thermal image, e.g. acquired by the thermal camera.

Performing the sweeping (scanning; tracking) motion in step 112 may comprise selecting the imaging sweep range, e.g. by the processor which can be part of one or more controllers or on-board controllers, from a plurality of possible imaging sweep ranges taking the target position into account, such as to limit the range of the scanning motion to a range where the dead animal is likely to be found. For example, the target position as determined in step 111 may comprise more information, e.g. be more accurate, than can be accounted for in the step 111 of moving the manipulator, and this additional information may be used to select a imaging sweep range, e.g. volume of interest, where the camera searches for the dead animal. For example, the step of moving 101 may be constrained by physical limitations, such as the freedom of movement allowed by traveling along a rail or track system 3.

The method can comprise steering in step 103 the manipulator 8 to a precise position of the dead animal as located by using the camera 7, e.g. steering the manipulator by the processor which can be part of one or more controllers or on-board controllers, such that the manipulator 8 is brought into a predetermined relative position with respect to the dead animal.

The steering in step 103 of the manipulator may comprise iteratively determining a next movement in a next iteration step taking sensor data and/or a camera image acquired in a present iteration step into account, thus iteratively updating in step 113 the position of the manipulator until the manipulator reaches the predetermined relative position with respect to the dead animal.

For example, the manipulator 8 may be mounted on a secondary actuator 22, which is controlled in the step 103 of steering the manipulator. This secondary actuator 22 may be mounted on a primary actuator 21 for moving 101,105 the assembly in the animal housing facility. Thus, the primary actuator may provide mobility of the assembly over a relatively long distance, e.g. a range of at least 5m, e.g. a range of at least 10m, e.g. a range of at least 50m, e.g. a range of at least 100m. The primary actuator 21 may be mounted in a rail system 3, and, thus, the steps of moving 101,105 may comprise moving a track or rail of the rail system 3. The secondary actuator 22 may provide (more) precise control on the position of the manipulator, e.g. may comprise a robotic arm. For example, the secondary actuator may provide more degrees of freedom, e.g. at least two independent components of translation and/or rotation, e.g. at least three independent components of translation and/or rotation, e.g. at least four independent components of translation and/or rotation. For example, steering 103 the manipulator 8 may comprise steering the secondary actuator 22 to the more precise position of the dead animal as determined by the processor which can be part of one or more controllers or on-board controllers, using the camera.

The secondary actuator 22 may comprise a telescopic arm 23 for vertically displacing the manipulator 8, a rotation stage 24 on the telescopic arm, and a translation stage 25 on the rotation stage. The rotation stage is adapted for rotating the translation stage in a horizontal plane and the translation stage is adapted for translating the manipulator 8 radially inward and outward.

The method comprises collecting in step 104 the dead animal with the manipulator 8, e.g. under the control of the processor 6 which can be part of one or more controllers or onboard controllers, when the manipulator is in the predetermined relative position, e.g. (straight) above the dead animal. Aspects of the dead animal can be measured such as those which can give an indication of the health of the flock.

For example, the manipulator 8 may comprise a support surface 81 onto which the dead animal can be placed, and a displacement mechanism 82 for pushing the dead animal onto the support surface when controlled by the processor 6 which can be part of one or more controllers or on-board controllers, so as to collect the dead animal. Thus, collecting the dead animal in step 104 may comprise lowering the manipulator in an open position from above the dead animal, such that the dead animal is positioned in between a support surface and a displacement mechanism, and then closing the manipulator such that the support surface and the displacement mechanism are moved toward each other, thereby pushing the dead animal onto the support surface.

The method may comprise depositing in step 114 the dead animal collected by the manipulator 8 into a receptacle 9. The receptacle may be attached to a frame such that it moves along with the manipulator in the step 101 of moving the manipulator 8 inside the animal housing facility and in the step 105 of moving the manipulator to the predetermined disposal location. However, the manipulator 8 may be adapted for moving (e.g. substantially) independently of the receptacle 9 in the steps 103 of steering the manipulator 8 to the precise position of the dead animal and collecting in step 104 the dead animal with the manipulator 8. Aspects of the dead animal can be measured such as those which can give an indication of the health of the flock,

The step 114 of depositing may comprise controlling, by the processor which can be part of one or more controllers or on-board controllers, the manipulator so as to deposit the dead animal into the receptacle 9. For example, step 114 of depositing the dead animal may comprise positioning the manipulator 8 above an open end at an upper side of the receptacle 9 and controlling the manipulator 8 such as to release the collected dead animal when positioned above the open upper side of the receptacle.

The method may comprise determining in step 115, e.g. by the processor 6 which can be part of one or more controllers or on-board controllers, when said receptacle is full or substantially full. For example, this determining step 115 may comprise determining a quantity indicative of the contents of the receptacle, e.g. using a contents sensor 10. This quantity may comprise a weight, a mass, a volume, a distance from a reference point to a nearest point occupied by contents of the receptacle along a sensing path, an interruption of a line of sight along an optical gate path in the receptacle, and the like. In step 115 when determining when the receptacle is full or substantially full may thus be based on a signal received from the contents sensor.

The method comprises moving in step 105, e.g. under control of the processor, the manipulator to a predetermined disposal location and depositing step 106, e.g. under control of the processor which can be part of one or more controllers or on-board controllers, the dead animal at the disposal location.

In step 105, for moving the manipulator to the predetermined disposal location, may comprise moving step 116 for moving the receptacle (which, as mentioned hereinabove, may move along with the manipulator in the step of moving step 105 the manipulator) to the predetermined disposal location when the receptacle is determined to be full or substantially full.

Furthermore, the method may comprise repeating in step 118 the steps 101, 102, 103, 104, 114 and 115, and optionally also the steps 111 and/or 112 and/or 113, when the receptacle is determined to be not (yet) full or substantially full.

Depositing the dead animal in step 106 may comprise discharging in step 117 the contents of the receptacle at the disposal location, e.g. under the control of the processor 6 which can be part of one or more controllers or on-board controllers and using an emptying mechanism of the receptacle.

Other features, or details of the features described hereinabove, of a method in accordance with embodiments of the present invention shall be clear in view of the description provided hereinabove relating to a device in accordance with embodiments of the present invention, and/or vice versa.

In a third aspect, the present invention relates to a computer program product for, when executed by a processor, performing a method in accordance with embodiments of the second aspect of the present invention. In accordance with embodiments of the present invention software may be implemented as a computer program product which has been compiled for a processing engine like processor 6 to carry out any of the methods of the present invention or is compiled to execute in an interpretative virtual machine such as the Java^{™} Virtual Machine running on processor 6. A number or all of software components can be stored in the memory and are executable by the processor 6, e.g. the processor 6 can a component in a controller such as an on-board controller. The term "executable" means a program file that is in a form that can ultimately be run by the processor 6. Examples of executable programs may be, for example, a compiled program that can be translated into machine code in a format that can be loaded into a random access memory and run by the processor 6, or source code that may be expressed in proper format such as object code that is capable of being loaded into a random access memory and executed by the processor 6, or source code that may be interpreted by another executable program to generate instructions in a random access memory to be executed by the processor 6, etc. A device according to embodiments of the present invention may comprise logic encoded in media for performing any step, or steps of the methods according to embodiments of the present invention. Logic may comprise software encoded in a disk or other computer-readable medium and/or instructions encoded in an application specific integrated circuit (ASIC), field programmable gate array (FPGA), or other processor or hardware. A device will also include a CPU and/a GPU and memory, the CPU and/or GPU having a processing engine able to execute software of the present invention.

The software can be embodied in a computer program product adapted to carry out the following functions when the software is loaded onto the respective device or devices and executed on one or more processing engines such as microprocessors, ASICs, FPGAs etc.:
controlling removal of animal carcasses from an animal housing facility,
determining, e.g. using a processor which may be part of the controller or the on-board controller, a target position for collecting a dead animal,
this target position is determined by taking or receiving instructions and/or coordinates received via a communication unit and/or by taking a position of a dead animal as identified and located by a monitoring system into account preferably in an automatic way,
identifying and locating the dead animal by performing a sweeping motion (e.g. under control of the processor which may be part of the controller or the on-board controller) to move the camera over an imaging sweep range until the dead animal is recognized preferably in an automatic way, e.g. by the processor which may be part of the controller or the onboard controller, in an image acquired by the camera,
identifying and locating the dead animal preferably in an automatic way by detecting the presence of an animal shape in an optical image, e.g. an RGB image, e.g. acquired by an optical camera, and, at a corresponding position, detecting the absence of a heat signature of the animal in a thermal image, e.g. acquired by a thermal camera preferably in an automatic way.

The software can be embodied in a computer program product adapted to carry out the following functions when the software is loaded onto the respective device or devices and executed on one or more processing engines such as microprocessors, ASICs, FPGAs etc.:
performing the sweeping (scanning; tracking) by selecting the imaging sweep range preferably in an automatic way, e.g. by the processor which may be part of the controller or the on-board controller, from a plurality of possible imaging sweep ranges taking the target position into account, such as to limit the range of the scanning motion to a range where the dead animal is likely to be found,
steering the manipulator preferably in an automatic way to iteratively determine a next movement in a next iteration step taking sensor data and/or a camera image acquired in a present iteration step into account, thus iteratively updating the position of the manipulator until the manipulator reaches the predetermined relative position with respect to the dead animal. preferably in an automatic way,
collecting the dead animal preferably in an automatic way by lowering the manipulator in an open position from above the dead animal, such that the dead animal is positioned in between a support surface and a displacement mechanism, and then closing the manipulator such that the support surface and the displacement mechanism are moved toward each other, thereby pushing the dead animal onto the support surface preferably in an automatic way.

The software can be embodied in a computer program product adapted to carry out the following functions when the software is loaded onto the respective device or devices and executed on one or more processing engines such as microprocessors, ASICs, FPGAs etc.:
depositing the dead animal collected by the manipulator into a receptacle preferably in an automatic way,
determining, e.g. by the processor which may be part of the controller or the on-board controller, when the receptacle is full or substantially full (preferably in an automatic way),
determining a quantity indicative of the contents of the receptacle, e.g. using a contents sensor preferably in an automatic way, whereby this quantity may comprise a weight, a mass, a volume, a distance from a reference point to a nearest point occupied by contents of the receptacle along a sensing path, an interruption of a line of sight along an optical gate path in the receptacle, and the like,
determining when the receptacle is full or substantially full based on a signal received from the contents sensor preferably in an automatic way.

The software can be embodied in a computer program product adapted to carry out the following functions when the software is loaded onto the respective device or devices and executed on one or more processing engines such as microprocessors, ASICs, FPGAs etc.:
moving the manipulator to the predetermined disposal location preferably in an automatic way by moving the receptacle to the predetermined disposal location when the receptacle is determined to be full or substantially full,
depositing the dead animal preferably in an automatic way by discharging the contents of the receptacle at the disposal location, e.g. under the control of the processor which may be part of the controller or the on-board controller, and using an emptying mechanism of the receptacle preferably in an automatic way.

The software e.g. in the form of a computer product mentioned above can be stored on a non-transitory signal storage medium, such as an optical disk (CD-ROM or DVD-ROM); a magnetic tape, a magnetic disk, a ROM, or a solid state memory such as a USB flash memory or similar.

While the invention has been described hereinabove with reference to a number of embodiments, this is done to illustrate and not to limit the invention, the scope of which is determined by the accompanying claims. The skilled person will appreciate that features disclosed herein in connection with individual embodiments may be combined with features from other embodiments to obtain the same technical effects and advantages, without departing from the scope of the invention as defined by the appended claims.

## Claims

1. A device (1) configured for removing animal carcasses from an animal housing facility, the device comprising:
a manipulator (8) configured to collect a dead animal when the manipulator (8) is located in a predetermined relative position with respect to the dead animal;
an actuator (2) configured to move the manipulator (8) inside the animal housing facility; said actuator (2) comprising a primary actuator (21) for mounting on a rail system (3) and for moving the device along a track or rail of the rail system, and a secondary actuator (22) for moving the manipulator (8) with respect to the primary actuator (21);
a camera (7) configured to identify and locate the dead animal; and
a processor (6) configured to:
- control the actuator (2) to move to a target position indicative of a rough position of the dead animal in the animal housing facility,
- when said target position is reached, identify and locate the dead animal using said camera (7),
- thereafter, steer the actuator (2) to a precise position of the dead animal as located by using the camera (7), such that the manipulator (8) is brought into the predetermined relative position with respect to the dead animal,
- when the manipulator (8) is in the predetermined relative position, control the manipulator (8) such as to collect the dead animal with the manipulator (8), and
- control the actuator to move to a predetermined disposal location and depositing the dead animal at the disposal location
**characterised in that** said secondary actuator (22) comprises:
- a telescopic arm (23) for vertically displacing the manipulator (8),
- a rotation stage (24), on the telescopic arm (23),
- a translation stage (25), on the rotation stage (24),
wherein the rotation stage (24) is adapted for rotating the translation stage in a horizontal plane and the translation stage (25) is adapted for translating the manipulator (8) radially inward and outward.

2. The device of claim 1, wherein the processor is further configured to:
- measure aspects of the dead animal such as those which can give an indication of the health of the flock.

3. The device of claim 1 or 2, comprising a communication unit (5) and/or a monitoring system for monitoring the welfare of animals in the animal housing facility and for identifying and locating dead animals in the animal housing facility, wherein said processor (6) is configured to determine said target position by taking instructions and/or coordinates received via the communication unit (5) and/or by taking the position of a dead animal as identified and located by the monitoring system into account.

4. The device of any of the previous claims, wherein said camera (7) is located in or on the manipulator (8), and wherein said processor (6) is configured to identify and locate the dead animal by performing a sweeping motion using said actuator (2) to move said camera (7) over a imaging sweep range until said dead animal is recognized by the processor in an image acquired by the camera (7).

5. The device of claim 4, wherein said processor (6) is configured to select said imaging sweep range from a plurality of possible imaging sweep ranges taking said target position into account, such as to limit the range of the scanning motion to a range where the dead animal is likely to be found, or
wherein the processor (6) is configured to steer the actuator (2) to the precise position of the dead animal by iteratively determining a next movement to perform by the actuator (2) in a next iteration step taking sensor data and/or a camera image acquired in a present iteration step into account, thus iteratively updating the position of the manipulator (8) until the manipulator (8) reaches the predetermined relative position with respect to the dead animal.

6. The device of any of the previous claims, wherein said processor (6) is configured to control the actuator (2) and the manipulator (8) so as to deposit the dead animal, collected by the manipulator (8), into a receptacle (9), and/or
wherein the processor (6) is configured to control the actuator (2) such as to position the manipulator (8) above an open end at an upper side of the receptacle (9) and to control the manipulator (8) such as to release the collected dead animal when positioned above the open upper side of the receptacle (9).

7. The device of claim 6, wherein said receptacle (9) comprises an emptying mechanism for discharging the contents of the receptacle (9), wherein said processor (6) is adapted for depositing the dead animal or dead animals, contained in the receptacle (9), at the disposal location by controlling said emptying mechanism.

8. The device of claim 6 or 7, comprising a contents sensor (10) to determine a quantity indicative of the contents of the receptacle (9), wherein said processor (6) is adapted to determine when said receptacle (9) is full or substantially full based on a signal received from the contents sensor (10), and for controlling the actuator (2) to move the actuator to the predetermined disposal location when the receptacle is determined to be full or substantially full.

9. The device of claim 1, wherein said processor (6) is adapted for controlling the primary actuator (21) to move the actuator to the target position, being approximative due to at least the limitations imposed by the movement constraints of movement along the track or rail, and thereafter, steering the secondary actuator (22), to the more precise position of the dead animal as determined by the processor (6) using said camera (7).

10. The device of any of the previous claims, wherein said manipulator (8) comprises a support surface (81) onto which the dead animal can be placed, and a displacement mechanism (82) for pushing the dead animal onto the support surface (81) when controlled by the processor (6) so as to collect the dead animal.

11. A computer-implemented method (100) for removing animal carcasses from an animal housing facility, the method comprising:
using the device in accordance with any of claims 1 to 10,
- moving (101) a manipulator (8) inside the animal housing facility to a target position indicative of a rough position of a dead animal in the animal housing facility,
- identifying and locating (102) the dead animal using a camera (7), when the target position is reached,
- steering (103) the manipulator (8) to a precise position of the dead animal as located by using the camera (7), such that the manipulator is brought into a predetermined relative position with respect to the dead animal,
- collecting (104) the dead animal with the manipulator (8) when the manipulator is in the predetermined relative position,
- moving (105) the manipulator to a predetermined disposal location and
- depositing (106) the dead animal at the disposal location.

12. A computer-implemented method (100) according to claim 13, wherein one or some or all of the method steps are carried out automatically.

13. A computer program product comprising instructions which, when executed by the processor of the device of any of claims 1 to 10, cause said device to perform the steps of the method in accordance with claim 11 or claim 12.

## Patentansprüche

1. Vorrichtung (1), die zum Entfernen von Tierkörpern aus einer Tierhaltungseinrichtung konfiguriert ist, wobei die Vorrichtung das Folgende aufweist:
einen Manipulator (8), der zum Sammeln eines toten Tiers konfiguriert ist, wenn sich der Manipulator (8) in einer vorbestimmten Relativposition in Bezug auf das tote Tier befindet;
einen Aktuator (2), der zum Bewegen des Manipulators (8) in der Tierhaltungseinrichtung konfiguriert ist; wobei der Aktuator (2) einen primären Aktuator (21) für eine Montage auf einem Schienensystem (3) und zum Bewegen der Vorrichtung entlang einer Bahn oder Schiene des Schienensystems und einen sekundären Aktuator (22) zum Bewegen des Manipulators (8) relativ zu dem primären Aktuator (21) aufweist;
eine Kamera (7), die zum Identifizieren und Lokalisieren des toten Tiers konfiguriert ist; und
einen Prozessor (6), der für das Folgende konfiguriert ist:
- Steuern oder Regeln des Aktuators (2) derart, dass sich dieser zu einer Zielposition bewegt, die eine ungefähre Position des toten Tiers in der Tierhaltungseinrichtung indiziert,
- Identifizieren und Lokalisieren des toten Tiers unter Verwendung der Kamera (7), wenn die Zielposition erreicht wird,
- anschließendes Lenken des Aktuators (2) an eine präzise Position des toten Tiers, wie diese durch die Verwendung der Kamera (7) lokalisiert wurde, derart, dass der Manipulator (8) in die vorbestimmte Relativposition in Bezug auf das tote Tier gebracht wird,
- Steuern oder Regeln des Manipulators (8) zum Einsammeln des toten Tiers mit dem Manipulator (8), wenn sich der Manipulator (8) in der vorbestimmten Relativposition befindet, und
- Steuern oder Regeln des Aktuators zum Bewegen zu einem vorbestimmten Beseitigungsort und zum Ablegen des toten Tiers an dem Beseitigungsort,
**dadurch gekennzeichnet, dass** der sekundäre Aktuator (20) das Folgende aufweist:
- einen Teleskoparm (23) zum vertikalen Bewegen des Manipulators (8),
- eine Rotationsstufe (24) auf oder an dem Teleskoparm (23),
- eine Translationsstufe (25) auf oder an der Rotationsstufe (24),
wobei die Rotationsstufe (24) angepasst ist, um die Translationsstufe in einer horizontalen Ebene zu verdrehen, und wobei die Translationsstufe (25) geeignet angepasst ist, um den Manipulator (8) translatorisch radial nach innen und nach außen zu bewegen.

2. Vorrichtung nach Anspruch 1, wobei der Prozessor weiterhin für das Folgende konfiguriert ist:
- Messen von Aspekten des toten Tiers, wie beispielsweise solcher, die einen Hinweis auf die Gesundheit der Herde geben können.

3. Vorrichtung nach Anspruch 1 oder 2, mit einer Kommunikationseinheit (5) und/oder einem Überwachungssystem zum Überwachen des Wohlergehens von Tieren in der Tierhaltungseinrichtung und zum Identifizieren und Lokalisieren toter Tiere in der Tierhaltungseinrichtung, wobei der Prozessor (6) konfiguriert ist, um die Zielposition zu bestimmen, indem über die Kommunikationseinheit (5) empfangene Instruktionen und/oder Koordinaten und/oder die Position eines toten Tiers, das durch das Überwachungssystem identifiziert und lokalisiert wurde, berücksichtigt werden.

4. Vorrichtung nach einem der vorhergehenden Ansprüche, wobei die Kamera (7) in oder auf dem Manipulator (8) angeordnet ist, und wobei der Prozessor (6) konfiguriert ist, um das tote Tier zu identifizieren und zu lokalisieren, indem eine schweifende Bewegung unter Verwendung des Aktuators (2) ausgeführt wird, um die Kamera (7) über einen Bildschweifbereich zu bewegen, bis das tote Tier durch den Prozessor in einem durch die Kamera (7) aufgenommenen Bild erkannt wird.

5. Vorrichtung nach Anspruch 4, wobei der Prozessor (6) konfiguriert ist, um den Bildschweifbereich aus einer Mehrzahl möglicher Bildschweifbereiche unter Berücksichtigung der Zielposition auszuwählen, um beispielsweise den Bereich der Scanbewegung auf einen Bereich zu begrenzen, in dem das tote Tier wahrscheinlich zu finden sein wird, oder
wobei der Prozessor (6) konfiguriert ist, um den Aktuator (2) zu der präzisen Position des toten Tiers zu lenken, indem eine nächste durch den Aktuator (2) auszuführende Bewegung in einem nächsten Iterationsschritt iterativ bestimmt wird, wobei Sensordaten und/oder ein Kamerabild berücksichtigt werden, die in einem gegenwärtigen Iterationsschritt erlangt wurden, wodurch somit die Position des Manipulators (8) iterativ aktualisiert wird, bis der Manipulator (8) die vorbestimmte Relativposition in Bezug auf das tote Tier erreicht.

6. Vorrichtung nach einem der vorhergehenden Ansprüche, wobei der Prozessor (6) konfiguriert ist, um den Aktuator (2) und den Manipulator (8) so zu steuern oder regeln, dass das durch den Manipulator (8) gesammelte tote Tier in einem Behältnis (9) abgelegt wird, und/oder wobei der Prozessor (6) konfiguriert ist, um den Aktuator (2) so zu steuern oder regeln, dass der Manipulator (8) oberhalb eines offenen Endes an einer Oberseite des Behältnisses (9) positioniert wird, und um den Manipulator (8) so zu steuern oder regeln, dass das gesammelte tote Tier freigegeben wird, wenn es oberhalb der offenen Oberseite des Behältnisses (9) positioniert ist.

7. Vorrichtung nach Anspruch 6, wobei das Behältnis (9) einen Ausleerungsmechanismus zum Abführen des Inhalts des Behältnisses (9) aufweist, wobei der Prozessor (6) angepasst ist, um das tote Tier oder die toten Tiere, die in dem Behältnis (9) aufgenommen sind, an dem Beseitigungsort abzulegen, indem der Ausleerungsmechanismus gesteuert oder geregelt wird.

8. Vorrichtung nach Anspruch 6 oder 7, mit einem Inhaltssensor (10) zum Bestimmen einer Quantität, die den Inhalt des Behältnisses (9) indiziert, wobei der Prozessor (6) angepasst ist, um basierend auf einem von dem Inhaltssensor (10) empfangenen Signal zu bestimmen, wenn das Behältnis (9) voll oder im Wesentlichen voll ist, und um den Aktuator (2) zu steuern oder regeln, damit sich der Aktuator zu dem vorbestimmten Beseitigungsort bewegt, wenn festgestellt wurde, dass das Behältnis voll oder im Wesentlichen voll ist.

9. Vorrichtung nach Anspruch 1, wobei der Prozessor (6) angepasst ist, um den primären Aktuator (21) zu steuern oder regeln, damit sich der Aktuator zu der Zielposition bewegt, wobei diese mindestens aufgrund der Einschränkungen, die durch Bewegungsbegrenzungen hinsichtlich der Bewegung entlang der Bahn oder Schiene bestehen, nur eine Näherung ist, und um danach den sekundären Aktuator (22) zu der präziseren Position des toten Tiers, wie diese durch den Prozessor (6) unter Verwendung der Kamera (7) bestimmt wurde, zu steuern.

10. Vorrichtung nach einem der vorhergehenden Ansprüche, wobei der Manipulator (8) eine Tragfläche (81), auf der das tote Tier abgelegt werden kann, und einen Verschiebemechanismus (82) zum Schieben des toten Tiers auf die Tragfläche (81), wenn dieser durch den Prozessor (6) gesteuert oder geregelt wird, um das tote Tier aufzusammeln, aufweist.

11. Computerimplementiertes Verfahren (100) zum Entfernen von Tierkörpern aus einer Tierhaltungseinrichtung, wobei das Verfahren das Folgende aufweist:
Verwendung der Vorrichtung gemäß einem der Ansprüche 1 bis 10,
- Bewegen (101) eines Manipulators (8) in der Tierhaltungseinrichtung zu einer Zielposition, die eine ungefähre Position des toten Tiers in der Tierhaltungseinrichtung indiziert,
- Identifizieren und Lokalisieren (102) des toten Tiers unteren Verwendung einer Kamera (7), wenn die Zielposition erreicht wird,
- Steuern (103) des Manipulators (8) zu einer präzisen Position des toten Tiers, wie diese durch die Verwendung der Kamera lokalisiert wurde, derart, dass der Manipulator in eine vorbestimmte Relativposition in Bezug auf das tote Tier gebracht wird,
- Aufsammeln (104) des toten Tiers mit dem Manipulator (8), wenn sich der Manipulator in der vorbestimmten Relativposition befindet,
- Bewegen (105) des Manipulators zu einem vorbestimmten Beseitigungsort, und
- Ablegen (106) des toten Tiers an dem Beseitigungsort.

12. Computerimplementiertes Verfahren (100) nach Anspruch 13, wobei einer der oder mehrere der oder alle Verfahrensschritte automatisch ausgeführt werden.

13. Computerprogrammprodukt mit Befehlen, die bei ihrer Ausführung durch den Prozessor der Vorrichtung nach einem der Ansprüche 1 bis 10 bewirken, dass die Vorrichtung die Verfahrensschritte nach Anspruch 11 oder Anspruch 12 ausführt.

## Revendications

1. Dispositif (1) configuré de manière à enlever des carcasses d'animaux d'une structure d'hébergement d'animaux, le dispositif comprenant :
un dispositif de manutention (8) configuré de manière à collecter un animal mort lorsque le dispositif de manutention (8) est situé dans une position relative prédéterminée par rapport à l'animal mort ;
un actionneur (2) configuré de manière à déplacer le dispositif de manutention (8) à l'intérieur de la structure d'hébergement d'animaux ;
ledit actionneur (2) comprenant un actionneur primaire (21) destiné à être monté sur un dispositif à rail (3) et à déplacer le dispositif le long d'une voie ou rail du dispositif à rail, et un actionneur secondaire (22) destiné à déplacer le dispositif de manutention (8) par rapport à l'actionneur primaire (21) ;
une caméra (7) configurée de manière à identifier et à localiser l'animal mort ; et
un processeur (6) configuré de manière à :
commander l'actionneur (2) afin d'assurer le déplacement vers une position cible indicative d'une position approximative de l'animal mort dans la structure d'hébergement d'animaux,
lorsque ladite position cible est atteinte, identifier et localiser l'animal mort en utilisant ladite caméra (7),
ensuite, diriger l'actionneur (2) vers une position précise de l'animal mort tel que localisé en utilisant ladite caméra (7), de telle sorte que le dispositif de manutention (8) est amené dans la position relative prédéterminée par rapport à l'animal mort,
lorsque le dispositif de manutention (8) est dans la position relative prédéterminée, commander le dispositif de manutention (8) afin de collecter l'animal mort avec le dispositif de manutention (8), et
commander l'actionneur afin d'assurer le déplacement vers un emplacement de dépose prédéterminé et déposer l'animal mort à l'emplacement de dépose
caractérisé en ce ledit actionneur secondaire (22) comprend :
un bras télescopique (23) destiné à déplacer verticalement le dispositif de manutention (8),
un étage de rotation (24), sur le bras télescopique (23),
un étage de translation (25), sur l'étage de rotation (24),
dans lequel l'étage de rotation (24) est adapté afin de faire tourner l'étage de translation dans un plan horizontal et l'étage de translation (25) est adapté afin de déplacer le dispositif de manutention (8) radialement vers l'intérieur et l'extérieur.

2. Dispositif selon la revendication 1, dans lequel le processeur est, en outre, configuré de manière à :
mesurer certains aspects de l'animal mort tels que ceux qui peuvent donner une indication de la santé du troupeau.

3. Dispositif selon la revendication 1 ou 2, comprenant une unité de communication (5) et/ou un dispositif de surveillance destiné à surveiller le bien-être des animaux dans la structure d'hébergement d'animaux et à identifier et localiser les animaux morts dans la structure d'hébergement d'animaux, dans lequel ledit processeur (6) est configuré de manière à déterminer ladite position cible en prenant des instructions et/ou des coordonnées reçues par l'intermédiaire de l'unité de communication (5) et/ou en prenant en considération la position d'un animal mort tel qu'identifié et localisé par le dispositif de surveillance.

4. Dispositif selon l'une quelconque des revendications précédentes, dans lequel ladite caméra (7) est située dans ou sur le dispositif de manutention (8), et dans lequel ledit processeur (6) est configuré de manière à identifier et localiser l'animal mort en réalisant un balayage rapide avec ledit actionneur (2) afin de déplacer ladite caméra (7) sur une plage de balayage de prise de vue jusqu'à ce que ledit animal mort soit identifié par le processeur sur une image acquise par la caméra (7).

5. Dispositif selon la revendication 4, dans lequel ledit processeur (6) est configuré de manière à sélectionner ladite plage de balayage de prise de vue à partir d'une pluralité de plages de balayage de prise de vue possibles prenant en compte ladite position cible, de manière à limiter la plage du mouvement de balayage à une plage dans laquelle l'animal mort est susceptible d'être trouvé, ou
dans lequel le processeur (6) est configuré de manière à diriger l'actionneur (2) vers la position précise de l'animal mort en déterminant de manière itérative un mouvement suivant à exécuter par l'actionneur (2) dans une étape d'itération suivante prenant en compte des données de capteur et/ou une image de caméra acquise dans une étape d'itération présente, actualisant ainsi de manière itérative la position du dispositif de manutention (8) jusqu'à ce que le dispositif de manutention (8) atteigne la position relative prédéterminée par rapport à l'animal mort.

6. Dispositif selon l'une quelconque des revendications précédentes, dans lequel ledit processeur (6) est configuré de manière à commander l'actionneur (2) et le dispositif de manutention (8) afin de déposer l'animal mort, collecté par le dispositif de manutention (8), dans un réceptacle (9), et/ou
dans lequel le processeur (6) est configuré de manière à commander l'actionneur (2) afin de positionner le dispositif de manutention (8) au-dessus d'une extrémité ouverte sur une face supérieure du réceptacle (9) et de commander le dispositif de manutention (8) afin de libérer l'animal mort collecté lorsqu'il est positionné au-dessus de la face supérieure ouverte du réceptacle (9).

7. Dispositif selon la revendication 6, dans lequel ledit réceptacle (9) comprend un mécanisme de vidage destiné à décharger le contenu du réceptacle (9), dans lequel ledit processeur (6) est adapté afin de déposer l'animal mort ou les animaux morts, contenus dans le réceptacle (9), à l'emplacement de dépose en commandant ledit mécanisme de vidage.

8. Dispositif selon la revendication 6 ou 7, comprenant un capteur de contenu (10) afin de déterminer une quantité indicative du contenu du réceptacle (9), dans lequel ledit processeur (6) est adapté afin de déterminer lorsque ledit réceptacle (9) est complètement ou sensiblement plein sur la base d'un signal reçu du capteur de contenu (10), et de commander l'actionneur (2) afin de déplacer l'actionneur vers l'emplacement de dépose prédéterminé lorsqu'il est déterminé que le réceptacle est complètement ou sensiblement plein.

9. Dispositif selon la revendication 1, dans lequel ledit processeur (6) est adapté afin de commander l'actionneur primaire (21) de manière à déplacer l'actionneur vers la position cible, qui est approximative au moins du fait des limitations imposées par les contraintes de mouvement du déplacement le long de la voie ou rail, et ensuite, de diriger l'actionneur secondaire (22) vers la position plus précise de l'animal mort telle que déterminée par le processeur (6) en utilisant ladite caméra (7).

10. Dispositif selon l'une quelconque des revendications précédentes, dans lequel ledit dispositif de manutention (8) comprend une surface de support (81) sur laquelle l'animal mort peut être placé, et un mécanisme de déplacement (82) destiné à pousser l'animal mort sur la surface de support (81) lorsqu'il est commandé par le processeur (6) de manière à collecter l'animal mort.

11. Procédé mis en oeuvre sur ordinateur (100) destiné à enlever des carcasses d'animaux à partir d'une structure d'hébergement d'animaux, le procédé comprenant :
l'utilisation du dispositif selon l'une quelconque des revendications 1 à 10,
le déplacement (101) d'un dispositif de manutention (8) à l'intérieur de la structure d'hébergement d'animaux vers une position cible indicative d'une position approximative d'un animal mort dans la structure d'hébergement d'animaux,
l'identification et localisation (102) de l'animal mort en utilisant une caméra (7), lorsque la position cible est atteinte,
le guidage (103) du dispositif de manutention (8) vers une position précise de l'animal mort tel que localisé en utilisant la caméra (7), de telle sorte que le dispositif de manutention est amené dans une position relative prédéterminée par rapport à l'animal mort,
la collecte (104) de l'animal mort avec le dispositif de manutention (8) lorsque le dispositif de manutention est dans la position relative prédéterminée,
le déplacement (105) du dispositif de manutention vers un emplacement de dépose prédéterminé et
le dépôt (106) de l'animal mort à l'emplacement de dépose.

12. Procédé mis en oeuvre sur ordinateur (100) selon la revendication 13, dans lequel une ou certaines, ou toutes les étapes de procédé sont mises en oeuvre de manière automatique.

13. Produit formant programme informatique comprenant des instructions qui, lorsqu'elles sont exécutées par le processeur du dispositif selon l'une quelconque des revendications 1 à 10, amènent ledit dispositif à exécuter les étapes du procédé selon la revendication 11 ou 12.
